# FASCICULE DE BREVET EUROPEEN

(11) **EP 2 211 674 B1**
(45) Date de publication et mention de la délivrance du brevet: **22.06.2016**
(21) Numéro de dépôt: 08872054.5
(22) Date de dépôt: 18.11.2008
(51) Int. Cl.: A47J 43/07, A47J 43/08, A47J 43/046, A47J 43/04

(54) **RECIPIENT D'APPAREIL ELECTROMENAGER DE PREPARATION CULINAIRE COMPORTANT UN ELEMENT DE TRANSMISSION INFERIEUR**
BEHÄLTER FÜR ELEKTRISCHES HAUSHALTSGERÄT ZUR LEBENSMITTELHERSTELLUNG MIT EINER UNTENSITZENDEN GETRIEBEEINHEIT
CONTAINER FOR ELECTRICAL HOUSEHOLD FOOD PREPARATION APPLIANCE COMPRISING A LOWER TRANSMISSION COMPONENT

(30) Priorité: 19.11.2007 FR 0708108; 26.05.2008 FR 0802822; 02.06.2008 FR 0803000
(43) Date de publication de la demande: 04.08.2010
(73) Titulaire: SEB S.A., 69130 Ecully (FR)
(72) Inventeur: DURRIS, Cyril, F-65690 Montignac (FR); SUPERBIE, Marc, F-65360 Momeres (FR)
(74) Mandataire: Rivière, Sophie
(86) Numéro de dépôt international: PCT/FR2008/001615
(87) Numéro de publication internationale: WO 2009/098380

(56) Documents cités:
- EP-A- 0 078 423
- CA-A- 975 752
- US-A- 4 303 282
- US-A- 5 297 475

## Description

La présente invention concerne le domaine technique des appareils électroménagers de préparation culinaire comportant un récipient de travail dans lequel tourne un outil de travail rotatif associé à un élément de transmission inférieur.

La présente invention concerne les récipients de travail et les appareils du type précité dans lesquels l'outil de travail rotatif et l'élément de transmission inférieur sont montés sur un arbre agencé dans un palier.

Une telle construction est notamment rencontrée dans les récipients de travail des appareils du type précité usuellement appelés blenders. Dans ces appareils, l'outil de travail rotatif est entraîné à des vitesses élevées pouvant dépasser 5000 tours/min. Pour éviter les échauffements et garantir un bon fonctionnement de l'appareil, un palier lubrifié est généralement utilisé. Un inconvénient des constructions des appareils antérieurs réside dans l'apparition de traces d'huile de manière visible dans la partie inférieure des récipients de travail.

Un récipient de travail pour appareil électroménager de préparation culinaire selon le préambule de la revendication 1 ou de la revendication 3 est connu du document US 5 297 475.

Un but de la présente invention est de proposer un récipient de travail pour appareil électroménager de préparation culinaire remédiant à l'inconvénient précité.

Un autre but de la présente invention est de proposer un appareil électroménager de préparation culinaire comportant un récipient de travail remédiant à l'inconvénient précité.

Ces buts sont atteints avec un récipient de travail pour appareil électroménager de préparation culinaire selon la revendication indépendante 1 ou la revendication indépendante 3.

Selon un mode de réalisation couvert par la revendication indépendante 1, le palier présente une partie inférieure agencée dans le réservoir. Cette disposition permet notamment de recueillir sur la paroi latérale du réservoir l'huile centrifugée hors du palier.

Avantageusement alors, le palier est logé dans une tubulure. Cette disposition permet de faciliter le montage du palier dans le fond du réceptacle.

Selon un autre mode de réalisation couvert par la revendication indépendante 3, le palier est logé dans une tubulure et la tubulure présente une extrémité inférieure entourant une partie inférieure du palier, l'extrémité inférieure de la tubulure s'étendant dans le réservoir. Cette disposition permet de recueillir sur la paroi interne de la tubulure l'huile centrifugée hors du palier. L'huile ainsi recueillie peut ensuite tomber par gravité dans le réservoir.

Avantageusement encore, le palier est réalisé en matériau métallique fritté. Cette disposition permet de faciliter la lubrification du palier.

Avantageusement encore, le palier repose sur une rondelle. Cette disposition permet de réduire l'échauffement de l'élément de transmission inférieur, ce qui contribue à limiter l'échappement de l'huile entre le palier et l'élément de transmission inférieur. La rondelle peut notamment reposer sur l'élément de transmission inférieur ou sur une rondelle intermédiaire disposée sur l'élément de transmission inférieur.

Avantageusement encore, un joint est monté sur l'axe entre le palier et l'outil de travail rotatif. Cette disposition permet de limiter l'échappement de l'huile dans le récipient de travail.

Avantageusement alors, pour limiter les frottements le joint est un joint à lèvre.

Avantageusement encore le réservoir présente une gorge. Cette disposition permet de former un réservoir permettant de recueillir l'huile.

Avantageusement alors la collerette supérieure est agencée en périphérie de la gorge. Cette disposition facilite l'écoulement dans la gorge de l'huile recueillie sur la paroi interne de la collerette.

Avantageusement encore l'élément de transmission inférieur présente des ailettes extérieures. Cette disposition permet de refroidir l'élément de transmission inférieur et d'augmenter la viscosité de l'huile recueillie.

Avantageusement alors les ailettes extérieures sont agencées en périphérie de la collerette. Cette disposition permet d'améliorer l'efficacité du refroidissement de la collerette.

Selon une forme de réalisation avantageuse, l'élément de transmission inférieur présente un organe d'entraînement inférieur. En alternative l'élément de transmission inférieur peut être monté sur un organe d'entraînement inférieur.

Ces buts sont atteints aussi avec un appareil électroménager de préparation culinaire, comportant une base logeant un moteur associé à un organe entraîneur supérieur, et un récipient de travail comportant un élément de transmission inférieur relié par un axe à un outil de travail rotatif agencé dans un réceptacle, l'axe traversant un fond du réceptacle et étant monté tournant dans un palier logé dans le fond du réceptacle, l'élément de transmission inférieur étant entraîné en rotation par l'organe entraîneur supérieur lorsque le récipient de travail est disposé sur la base, caractérisé en ce que le récipient de travail est conforme à l'une au moins des caractéristiques précédentes.

Selon une forme de réalisation avantageuse, l'organe entraîneur supérieur est entraîné directement par le moteur.

Selon une forme de réalisation avantageuse, l'outil de travail rotatif est entraîné en rotation à une vitesse supérieure à 5000 tours/min.

L'invention sera mieux comprise à l'étude d'un exemple de réalisation et d'une variante illustrés dans les figures annexées, dans lesquelles :
- la figure 1 est une vue en perspective et en coupe verticale d'un appareil électroménager de préparation culinaire comportant un récipient de travail selon l'invention,
- la figure 2 est une vue agrandie d'une partie de la figure 1,
- la figure 3 est une vue en perspective de l'organe d'entraînement du récipient de travail illustré sur les figures 1 et 2,
- la figure 4 est une vue schématique partielle en coupe d'une variante de réalisation d'un récipient de travail selon l'invention.

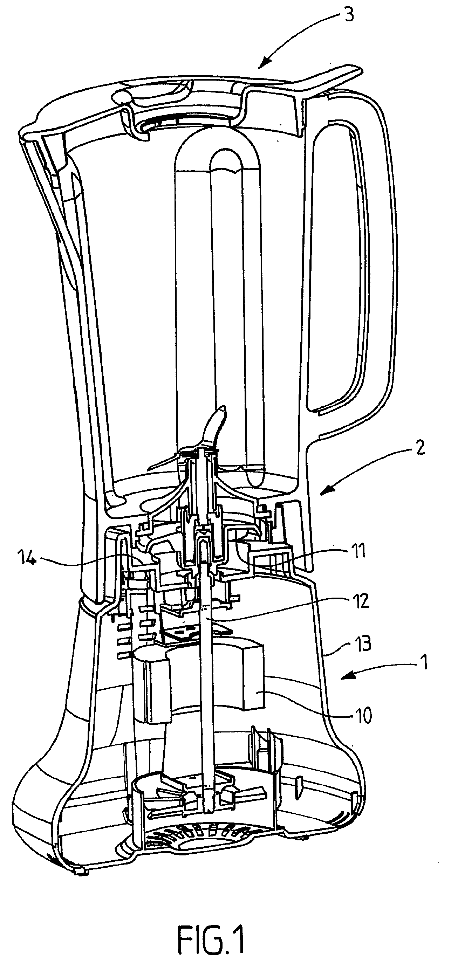

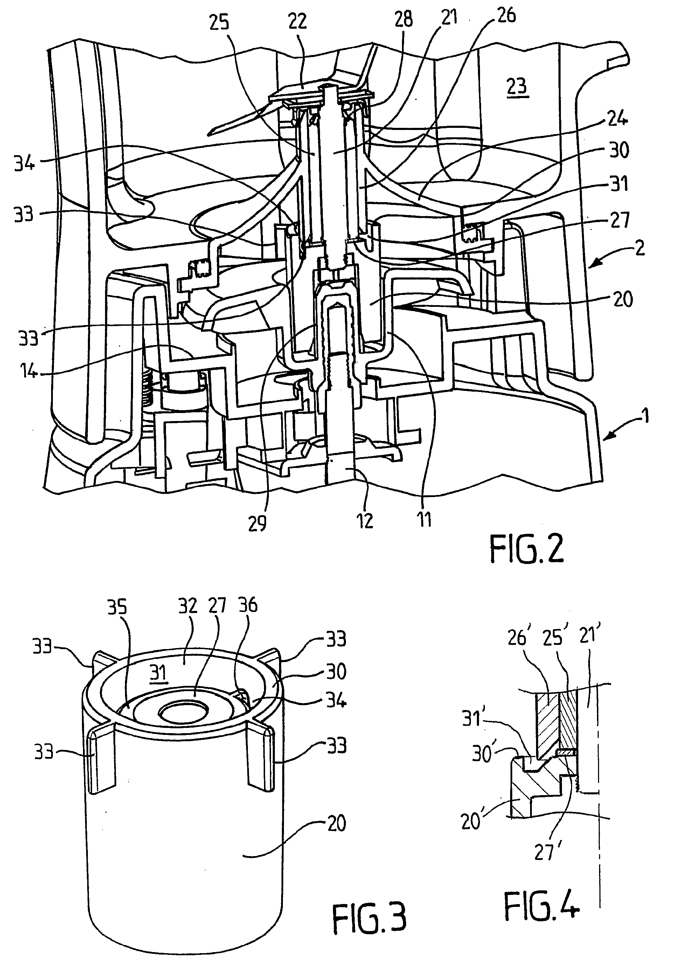

L'appareil électroménager de préparation culinaire illustré sur les figures 1 et 2 comporte une base 1 recevant un récipient de travail 2 fermé par un couvercle 3. La base 1 loge un moteur 10 associé à un organe entraîneur supérieur 11, le moteur 10 étant représenté de manière schématique sur la figure 1.

Selon le mode de réalisation préféré illustré sur la figure 1, l'organe entraîneur supérieur 11 est monté sur un arbre 12 issu du moteur 10. Ainsi l'organe entraîneur supérieur 11 est entraîné directement par le moteur 10.

La base 1 comporte un boîtier 13 formant un socle 14 sur lequel est agencé l'organe entraîneur supérieur 11.

Tel que mieux visible sur la figure 2, le récipient de travail 2 pour appareil électroménager de préparation culinaire comporte un élément de transmission inférieur 20 relié par un axe 21 à un outil de travail rotatif 22 agencé dans un réceptacle 23. L'axe 21 traverse un fond 24 du réceptacle 23. L'axe 21 est monté tournant dans un palier 25 logé dans le fond 24.

Plus particulièrement, le palier 25 est logé dans une tubulure 26. La tubulure 26 s'étend part et d'autre du fond 24. La tubulure 26 présente avantageusement une extrémité inférieure agencée dans le réservoir 31. Le palier 25 présente avantageusement une partie inférieure s'étendant hors de la tubulure 26. Le palier 25 est avantageusement réalisé en matériau métallique fritté. Le palier 25 peut ainsi être imprégné d'huile.

Le palier 25 repose avantageusement sur une rondelle 27, mieux visible sur la figure 2. La rondelle 27 permet de réduire l'échauffement de l'élément de transmission inférieur 20 entraîné en rotation. Selon une forme de réalisation avantageuse, illustrée sur les figures, la rondelle 27 repose sur l'élément de transmission inférieur 20.

Un joint 28 est monté sur l'axe 21 entre le palier 25 et l'outil de travail rotatif 22. Selon une forme de réalisation avantageuse illustrée sur les figures 1 et 2, le joint 28 est un joint à lèvre.

L'élément de transmission inférieur 20 est entraîné en rotation par l'organe entraîneur supérieur 11 lorsque le récipient de travail 2 est disposé sur la base 1. Selon une forme de réalisation avantageuse illustrée sur les figures, l'élément de transmission inférieur 20 présente un organe d'entraînement inférieur 29 prévu pour coopérer avec l'organe entraîneur supérieur 11 de la base 1.

L'élément de transmission inférieur 20 présente une collerette supérieure 30 formant un réservoir 31 autour de l'axe 21. Plus particulièrement, le palier 25 présente une partie inférieure agencée dans le réservoir 31. Ainsi l'extrémité inférieure du palier 25 est agencée en regard d'une paroi latérale interne 32 de la collerette supérieure 30.

L'élément de transmission inférieur 20 présente des ailettes extérieures 33, mieux visibles sur la figure 3. Plus particulièrement les ailettes extérieures 33 sont agencées en périphérie de la collerette supérieure 30 et permettent de refroidir la paroi latérale du réservoir 31.

Tel que mieux visible sur la figure 2, le réservoir 31 présente une gorge 34 ménagée autour d'une partie centrale supérieure 35 de l'élément de transmission inférieur 20. La collerette supérieure 30 est agencée en périphérie de la gorge 34. Tel que mieux visible sur la figure 3, la rondelle 27 est disposée sur la partie centrale supérieure 35.

Avantageusement au moins un montant 36 relie la partie centrale supérieure 35 de l'élément de transmission inférieur 20 à la paroi latérale interne 32 de la collerette supérieure 30. De préférence au moins deux montants 36 permettent de faciliter le moulage de l'élément de transmission inférieur 20 et de rigidifier la collerette supérieure 30.

La présente invention fonctionne de la manière suivante. Lorsque l'outil de travail rotatif est entraîné en rotation à une vitesse élevée, l'échauffement du palier 25 et de l'axe 21 diminue la viscosité de l'huile de lubrification qui tend à s'échapper entre le palier 25 et l'élément de transmission inférieur 20 et notamment entre le palier 25 et la rondelle 27. La collerette supérieure 30 permet de collecter l'huile de lubrification éjectée entre le palier 25 et la rondelle 27 et de recueillir ladite huile dans le réservoir 31. Ainsi la présence de traces d'huile de lubrification sur les parois visibles du récipient de travail 2 peut être évitée.

La présente invention trouve une application notamment pour les appareils électroménagers de préparation culinaire dans lesquels l'outil de travail rotatif 22 est entraîné en rotation à une vitesse supérieure à 5000 tours/min.

La figure 4 illustre une variante de réalisation d'un récipient de travail pour appareil électroménager de préparation culinaire comportant un élément de transmission inférieur 20' relié par un axe 21' à un outil de travail rotatif agencé dans un réceptacle. L'élément de transmission inférieur 20' présente une collerette supérieure 30' formant un réservoir 31' autour de l'axe 21'. L'axe 21' est monté tournant dans un palier 25' logé dans le fond du réceptacle. Le palier 25' est logé dans une tubulure 26'. Le palier 25' repose sur une rondelle 27'. Cette variante de réalisation diffère de l'exemple de réalisation précédent en ce que la tubulure 26' présente une extrémité inférieure entourant une partie inférieure du palier 25', l'extrémité inférieure de la tubulure 26' s'étendant dans le réservoir 31'. Ainsi la paroi interne de l'extrémité inférieure de la tubulure 26' peut recevoir l'huile éjectée entre le palier 25' et la rondelle 27'. Cette huile recuillie par la paroi interne de l'extrémité inférieure de la tubulure 26' peut ensuite retomber dans le réservoir 31'.

A titre de variante l'organe d'entraînement inférieur 29 n'est pas nécessairement intégré à l'élément de transmission inférieur 20 ; 20'.

Notamment l'élément de transmission inférieur 20 ; 20' pourrait être monté sur un organe d'entraînement inférieur rapporté.

A titre de variante, la rondelle 27, 27' ne repose pas nécessairement directement sur l'élément de transmission inférieur 20, 20' mais pourrait notamment reposer sur une rondelle intermédiaire disposée sur l'élément de transmission inférieur 20, 20'.

La présente invention n'est nullement limitée à l'exemple de réalisation décrit et à ses variantes, mais englobe de nombreuses modifications dans le cadre des revendications.

## Revendications

1. Récipient de travail (2) pour appareil électroménager de préparation culinaire, comportant un élément de transmission inférieur (20) relié par un axe (21) à un outil de travail rotatif (22) agencé dans un réceptacle (23), l'axe (21) traversant un fond (24) du réceptacle (23) et étant monté tournant dans un palier (25) logé dans le fond (24) du réceptacle (23), l'élément de transmission inférieur (20) présentant une collerette supérieure (30) formant un réservoir (31) autour de l'axe (21), **caractérisé en ce que** le palier (25) présente une partie inférieure agencée dans le réservoir (31).

2. Récipient de travail selon la revendication 1, **caractérisé en ce que** le palier (25) est logé dans une tubulure (26).

3. Récipient de travail (2) pour appareil électroménager de préparation culinaire, comportant un élément de transmission inférieur (20') relié par un axe (21') à un outil de travail rotatif (22) agencé dans un réceptacle (23), l'axe (21') traversant un fond (24) du réceptacle (23) et étant monté tournant dans un palier (25') logé dans le fond (24) du réceptacle (23), l'élément de transmission inférieur (20') présentant une collerette supérieure (30') formant un réservoir (31') autour de l'axe (21'), **caractérisé en ce que** le palier (25') est logé dans une tubulure (26') et **en ce que** la tubulure (26') présente une extrémité inférieure entourant une partie inférieure du palier (25'), l'extrémité inférieure de la tubulure (26') s'étendant dans le réservoir (31').

4. Récipient de travail selon l'une des revendications 1 à 3, **caractérisé en ce que** le palier (25 ; 25') est réalisé en matériau métallique fritté.

5. Récipient de travail selon l'une des revendications 1 à 4, **caractérisé en ce que** le palier (25 ; 25') repose sur une rondelle (27 ; 27').

6. Récipient de travail selon l'une des revendications 1 à 5, **caractérisé en ce qu'**un joint (28) est monté sur l'axe (21) entre le palier (25 ; 25') et l'outil de travail rotatif (22).

7. Récipient de travail selon la revendication 6, **caractérisé en ce que** le joint (28) est un joint à lèvre.

8. Récipient de travail selon l'une des revendications 1 à 7, **caractérisé en ce que** le réservoir (31) présente une gorge (34).

9. Récipient de travail selon la revendication 8, **caractérisé en ce que** la collerette supérieure (30) est agencée en périphérie de la gorge (34).

10. Récipient de travail selon l'une des revendications 1 à 9, **caractérisé en ce que** l'élément de transmission inférieur (20) présente des ailettes extérieures (33).

11. Récipient de travail selon la revendication 10, **caractérisé en ce que** les ailettes extérieures (33) sont agencées en périphérie de la collerette supérieure (30).

12. Récipient de travail selon l'une des revendications 1 à 11, **caractérisé en ce que** l'élément de transmission inférieur (20) présente un organe d'entraînement inférieur (29).

13. Appareil électroménager de préparation culinaire comportant une base (1) logeant un moteur (10) associé à un organe entraîneur supérieur (11), et un récipient de travail (2) comportant un élément de transmission inférieur (20 ; 20') relié par un axe (21 ; 21') à un outil de travail rotatif (22) agencé dans un réceptacle (23), l'axe (21 ; 21') traversant un fond (24) du réceptacle (23) et étant monté tournant dans un palier (25 ; 25') logé dans le fond (24) du réceptacle (23), l'élément de transmission inférieur (20 ; 20') étant entraîné en rotation par l'organe entraîneur supérieur (11) lorsque le récipient de travail (2) est disposé sur la base (1), **caractérisé en ce que** le récipient de travail (2) est conforme à l'une des revendications 1 à 12.

14. Appareil électroménager de préparation culinaire selon la revendication 13, **caractérisé en ce que** l'organe entraîneur supérieur (11) est entraîné directement par le moteur (10).

15. Appareil électroménager de préparation culinaire selon l'une des revendications 13 ou 14, **caractérisé en ce que** l'outil de travail rotatif (22) est entraîné en rotation à une vitesse supérieure à 5000 tours/min.

## Patentansprüche

1. Arbeitsbehälter (2) für ein Elektrohaushaltsgerät zur Zubereitung von Speisen mit einem unteren Übertragungselement (20), das durch eine Achse (21) mit einem in einem Gefäß (23) angeordneten, drehenden Arbeitswerkzeug (22) verbunden ist, wobei die Achse (21) einen Boden (24) des Gefäßes (23) durchquert und in einem im Boden (24) des Gefäßes (23) untergebrachten Lager (25) drehend montiert ist, wobei das untere Übertragungselement (20) einen oberen Bund (30) aufweist, der um die Achse (21) eine Aufnahme (31) bildet, **dadurch gekennzeichnet, dass** das Lager (25) einen unteren Teil aufweist, der in der Aufnahme (31) angeordnet ist.

2. Arbeitsbehälter nach Anspruch 1, **dadurch gekennzeichnet, dass** das Lager (25) in einem Stutzen (26) untergebracht ist.

3. Arbeitsbehälter (2) für ein Elektrohaushaltsgerät zur Zubereitung von Speisen mit einem unteren Übertragungselement (20'), das durch eine Achse (21') mit einem in einem Gefäß (23) angeordneten, drehenden Arbeitswerkzeug (22) verbunden ist, wobei die Achse (21') einen Boden (24) des Gefäßes (23) durchquert und in einem im Boden (24) des Gefäßes (23) untergebrachten Lager (25') drehend montiert ist, wobei das untere Übertragungselement (20') einen oberen Bund (30') aufweist, der um die Achse (21') eine Aufnahme (31') bildet, **dadurch gekennzeichnet, dass** das Lager (25') in einem Stutzen (26') untergebracht ist und dass der Stutzen (26') ein unteres Ende aufweist, das einen unteren Teil des Lagers (25') umgibt, wobei sich das untere Ende des Stutzens (26') in die Aufnahme (31') erstreckt.

4. Arbeitsbehälter nach einem der Ansprüche 1 bis 3, **dadurch gekennzeichnet, dass** das Lager (25, 25') aus Sintermetall hergestellt ist.

5. Arbeitsbehälter nach einem der Ansprüche 1 bis 4, **dadurch gekennzeichnet, dass** das Lager (25, 25') auf einer Scheibe (27, 27') ruht.

6. Arbeitsbehälter nach einem der Ansprüche 1 bis 5, **dadurch gekennzeichnet, dass** zwischen dem Lager (25, 25') und dem drehenden Arbeitswerkzeug (22) eine Dichtung (28) auf die Achse (21) montiert ist.

7. Arbeitsbehälter nach Anspruch 6, **dadurch gekennzeichnet, dass** die Dichtung (28) eine Lippendichtung ist.

8. Arbeitsbehälter nach einem der Ansprüche 1 bis 7, **dadurch gekennzeichnet, dass** die Aufnahme (31) eine Hohlkehle (34) aufweist.

9. Arbeitsbehälter nach Anspruch 8, **dadurch gekennzeichnet, dass** sich der obere Bund (30) am Umfang der Hohlkehle (34) befindet.

10. Arbeitsbehälter nach einem der Ansprüche 1 bis 9, **dadurch gekennzeichnet, dass** das untere Übertragungselement (20) außenliegende Flügel (33) aufweist.

11. Arbeitsbehälter nach Anspruch 10, **dadurch gekennzeichnet, dass** die außenliegenden Flügel (33) am Umfang des oberen Bundes (30) angeordnet sind.

12. Arbeitsbehälter nach einem der Ansprüche 1 bis 11, **dadurch gekennzeichnet, dass** das untere Übertragungselement (20) ein unteres Antriebsorgan (29) aufweist.

13. Elektrohaushaltsgerät zur Zubereitung von Speisen mit einem Sockel (1), der einen mit einem oberen Antriebsorgan (11) verbundenen Motor (10) aufnimmt, und einem Arbeitsbehälter (2), der ein durch eine Achse (21, 21') mit einem in einem Gefäß (23) angeordneten drehenden Arbeitswerkzeug (22) verbundenes unteres Übertragungselement (20, 20') umfasst, wobei die Achse (21; 21') einen Boden (24) des Gefäßes (23) durchquert und in einem in dem Boden (24) des Gefäßes (23) untergebrachten Lager (25, 25') drehend montiert ist, wobei das untere Übertragungselement (20, 20') durch das obere Antriebsorgan (11) in Drehung versetzt wird, wenn der Arbeitsbehälter (2) auf den Sockel (1) gesetzt wird, **dadurch gekennzeichnet, dass** der Arbeitsbehälter (2) einem der Ansprüche 1 bis 12 entspricht.

14. Elektrohaushaltsgerät zur Zubereitung von Speisen nach Anspruch 13, **dadurch gekennzeichnet, dass** das obere Antriebsorgan (11) direkt durch den Motor (10) angetrieben wird.

15. Elektrohaushaltsgerät zur Zubereitung von Speisen nach einem der Ansprüche 13 oder 14, **dadurch gekennzeichnet, dass** das drehende Arbeitswerkzeug (22) mit einer Drehgeschwindigkeit von über 5000 U/min angetrieben wird.

## Claims

1. Working receptacle (2) for an electrical household food preparation appliance, consisting of a lower transmission element (20) attached by an axle (21) to a rotating work tool (22) arranged in a receptacle (23), the axle (21) crossing a base (24) of the receptacle (23) and being mounted pivotingly on a bearing (25) housed in the base (24) of the receptacle (23), the lower transmission element (20) featuring a upper collar (30) forming a tank (31) around the axle (21), **characterised in that** the bearing (25) has a lower part arranged in the tank (31).

2. Working receptacle according to claim 1, **characterised in that** the bearing (25) is housed in a tube (26).

3. Working receptacle (2) for an electrical household food preparation appliance, consisting of a lower transmission element (20') attached by an axle (21') to a rotating work tool (22) arranged in a receptacle (23), the axle (21') crossing a base (24) of the receptacle (23) and being mounted pivotingly on a bearing (25') housed in the base (24) of the receptacle (23), the lower transmission element (20') featuring a upper collar (30') forming a tank (31') around the axle (21'), **characterised in that** the bearing (25') is housed in a tube (26') and **in that** the tube (26') features a lower extremity encasing the lower part of the bearing (25'), the lower extremity of the pipe (26') extending into the tank (31').

4. Working receptacle according to one of claims 1 to 3, **characterised in that** the bearing (25; 25') is made out of sintered metal material.

5. Working receptacle according to one of claims 1 to 4, **characterised in that** the bearing (25; 25') sits on a washer (27; 27').

6. Working receptacle according to one of claims 1 to 5, **characterised in that** a seal (28) is assembled on the axle (21) between the bearing (25; 25') and the rotating work tool (22).

7. Working receptacle according to claim 6, **characterised in that** the seal (28) is a radial shaft seal.

8. Working receptacle according to one of claims 1 to 7, **characterised in that** the tank (31) features a groove (34).

9. Working receptacle according to claim 8, **characterised in that** the upper collar (30) is arranged around the groove (34).

10. Working receptacle according to one of claims 1 to 9, **characterised in that** the lower transmission element (20) features external blades (33).

11. Working receptacle according to claim 10, **characterised in that** the external blades (33) are arranged around of the upper collar (30).

12. Working receptacle according to one of claims 1 to 11, **characterised in that** the lower transmission element (20) features a lower drive unit (29).

13. Electrical household food preparation appliance comprising a base (1) housing a motor (10) linked to an upper drive unit (11), and a working receptacle (2) comprising a lower transmission element (20; 20') attached by an axle (21; 21') to a rotating work tool (22) arranged in a receptacle (23), the axle (21; 21') crossing the base (24) of the receptacle (23) and being mounted pivotingly on a bearing (25; 25') housed in the base (24) of the receptacle (23), the lower transmission element (20; 20') being driven in rotation by an upper drive unit (11) when the working receptacle (2) is placed on the base (1), **characterised in that** the working receptacle (2) conforms to any one of claims 1 to 12.

14. Electrical household food preparation appliance according to claim 13, **characterised in that** the upper drive unit (11) is driven directly by the motor (10).

15. Electrical household food preparation appliance according to one of claims 13 or 14, **characterised in that** the rotating work tool (22) is driven in rotation at a speed of greater than 5,000 revolutions/min.
